# EUROPEAN PATENT SPECIFICATION

(11) **EP 2 667 548 B1**
(45) Date of publication and mention of the grant of the patent: **18.02.2015**
(21) Application number: 12752648.1
(22) Date of filing: 23.02.2012
(51) Int. Cl.: H04L 12/721

(54) **NETWORK TRAFFIC VOLUME DISTRIBUTION METHOD, NETWORK NODE, AND SYSTEM**
VERFAHREN ZUR VERTEILUNG EINES NETZWERKVERKEHRSVOLUMENS, NETZWERKKNOTEN UND SYSTEM
PROCÉDÉ, NEUD DE RÉSEAU ET SYSTÈME DE DISTRIBUTION DE VOLUME DE TRAFIC DE RÉSEAU

(30) Priority: 02.03.2011 CN 201110050114
(43) Date of publication of application: 27.11.2013
(73) Proprietor: Huawei Technologies Co., Ltd., Shenzhen, Guangdong 518129 (CN)
(72) Inventor: ZHENG, Hewen, Shenzhen Guangdong 518129 (CN); CHEN, Guoyi, Shenzhen Guangdong 518129 (CN)
(74) Representative: Isarpatent
(86) International application number: PCT/CN2012/071516
(87) International publication number: WO 2012/116614

(56) References cited:
- WO-A1-2012/032424
- CN-A- 101 494 590
- CN-A- 102 088 413
- GB-A- 2 415 321
- US-A1- 2007 195 715
- US-A1- 2009 252 033
- US-B2- 7 158 486

## Description

### TECHNICAL FIELD

The present invention relates to the field of communication technologies, and in particular, to a method, network node, and network system for offloading network traffic.

### BACKGROUND

On a current network, traffic of video services occupies the majority of Internet traffic. It is estimated that the traffic of video services will account for 91% of the Internet traffic by 2014.

Different from traditional WWW (World Wide Web) browsing services, video services have such features as high per stream bandwidth consumption, and long duration. Per stream bandwidth consumption of traditional WWW browsing services is about 100 Kbps, per stream bandwidth consumption of standard definition videos is 2 Mbps, and per stream bandwidth consumption of high definition videos is 8 Mbps. Per stream duration of traditional WWW browsing services is about 10 seconds, and per stream duration of video services generally exceeds three minutes. Such features of the video services usually cause network congestion.

A method used by broadband network operators to solve network congestion currently is implementing load balancing of traffic through multiple paths. A method used by video service or content delivery network (Content Delivery Network, CDN) service providers to solve network congestion is also implementing load balancing of traffic through multiple paths.

In the foregoing solution, although a plurality of paths is deployed, route computation complies with a principle of shortest path first or equal-cost multi-path (selecting a device with a small Router-ID as a network edge egress device or dispersing traffic by using a Hash-based equal-cost multi-path algorithm), which results in that the traffic is concentrated on an egress port. Therefore, the features of large bandwidth and long duration of video traffic still cause the problem of network congestion.

US 7158486 B2 relates to a system and method for network routing where significant (those that impact optimal network routes) state changes of network components are considered. A set of optimal communication paths are generated for a number of actual and potential component failure scenarios. An optimal communication path is generated for each failure scenario.

GB 2415321 A relates to managing connections in a telecommunication network comprising: categorising connections into longer and shorter-lived connections; using a routing algorithm to determine routes for connections across the network, the routing algorithm using weights associated with the plurality of links or nodes and controlling the establishment of new connections or redeploying existing connections to balance utilisation of the links or nodes by the longer-lived connections.

US 2009/252033 A1 relates to systems and methods to distribute media content. A particular method includes receiving first link weighting factors and second link weighting factors at a router of a node of a multicast network and determining a primary path to a next hop node based on the first link weighting factors. Additionally, the method includes determining a backup path from a router of the primary path to the next hop node based on the second link weighting factors. The backup path does not overlap any primary path between two nodes of the network. Further, the method includes receiving a data packet from a parent node and routing a copy of the data packet from the router to the next hop node via the backup path, when a network link related to the router has failed. The method also includes routing data packets via a re-configured multicast tree excludes the failed link.

WO 2012/032424 A1 relates to a method in an Ethernet Bridge for improved load distribution in an Ethernet network that includes the Ethernet Bridge including determining a first set of one or more shortest paths between each Ethernet Bridge pair in the Ethernet network, selecting at least a first shortest path, calculating a link utilization value for each link of the Ethernet network, determining a second set of one or more shortest paths between each Ethernet Bridge pair in the Ethernet network, generating a path utilization value for each shortest path, selecting a second shortest path on the basis of said path utilization value, whereby the selection of the second shortest in light of path utilization minimizes the standard deviation of load distribution across the entire Ethernet network.

### SUMMARY

Embodiments of the present invention provide a method, network node, and network system for offloading network traffic, so as to prevent or solve the problem of network congestion caused by large-bandwidth services such as videos

In one aspect, an embodiment of the present invention provides a method for offloading network traffic, including: obtaining link utilization information of a network; computing a shortest path and a second shortest path to a content source; selecting a light-load path from the shortest path and the second shortest path according to the obtained link utilization information; and selecting traffic, monitoring, by a network node, received network traffic, and establishing a mapping relationship between subnets and traffic, and selecting, by the network node, traffic on one or more subnets according to the mapping relationship between subnets and traffic, and transmitting the traffic on the one or more subnets over the light-load path, wherein traffic on the same subnet is transmitted over the same path.

In another aspect, an embodiment of the present invention provides a network node, including: an obtaining module, configured to obtain link utilization information of a network where the network node is located; a computing module, configured to compute a shortest path and a second shortest path from the network node to a content source; a selecting module, configured to select a light-load path from the shortest path and the second shortest path; a monitoring module, configured to monitor received network traffic, and establish a mapping relationship between subnets and traffic; a storing module, configured to store the mapping relationship; and a dispersing module, configured to select traffic according to the mapping relationship between subnets and traffic, and disperse the selected traffic onto the light-load path, wherein traffic on the same subnet is transmitted over the same path.

In still another aspect, an embodiment of the present invention provides a network system, including: a network management system, configured to: obtain link utilization information of an autonomous system; select a network node for dispersing traffic; compute a shortest path and a second shortest path from the network node to a content source; select a light-load path from the shortest path and the second shortest path; and send a notification message to the selected network node, where the notification message carries the selected light-load path; and the network node, configured to monitor network traffic, establish a mapping relationship between subnets and traffic, receive the notification message, select traffic on one or more subnets according to the mapping relationship between subnets and traffic, and transmit the traffic on the one or more subnets over the light-load path carried in the notification message, wherein traffic on the same subnet is transmitted over the same path.

By using the foregoing embodiments of the present invention, a light-load path can be selected according to link utilization information of a network, and traffic is dispersed over the light-load path. In this way, dynamic load balancing of traffic is implemented, thereby preventing or mitigating network congestion.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for offloading network traffic according to an embodiment of the present invention;
FIG. 2 is a schematic flowchart of another method for offloading network traffic according to an embodiment of the present invention;
FIG. 3 is a schematic flowchart of another method for offloading network traffic according to an embodiment of the present invention;
FIG. 4 is a schematic structural diagram of a network node according to an embodiment of the present invention; and
FIG. 5 is a schematic structural diagram of a network management system according to an embodiment of the present invention.

### DESCRIPTION OF EMBODIMENTS

Firstly, it should be noted that in all embodiments of the present invention:

Network congestion does not mean a packet loss when link utilization reaches 100%, but means that network congestion occurs when the link utilization is greater than a preset threshold, for example, when the link utilization is greater than 60% or 80%.

A light-load path refers to a path with lower link utilization among a plurality of optional forwarding paths, and the link utilization of the light-load path should not be greater than a set threshold causing network congestion.

A content source refers to a physical server or a virtual server that directly provides users with content, where the content may include video, audio or other resources that need to be transmitted through the network.

Dispersing traffic means that traffic is divided according to different subnets, and traffic on a specific subnet is sent to a selected path for transmission. To avoid traffic loopback, when traffic is dispersed, reverse forwarding must be prohibited, that is, it is prohibited to forward traffic to an interface entering a network node.

The present invention is described in detail with reference to accompanying drawings and embodiments.

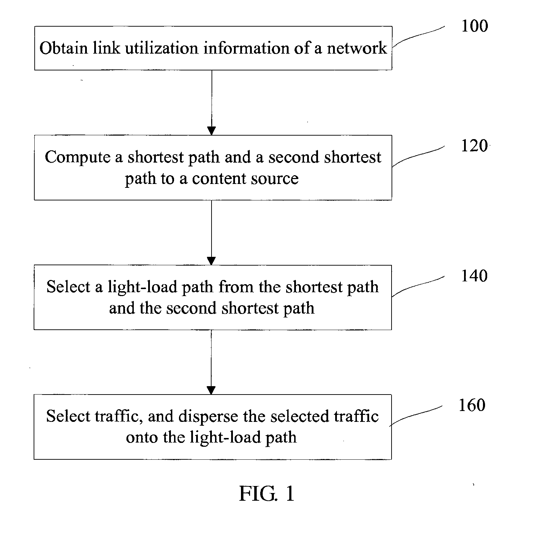

FIG. 1 is a schematic flowchart of a method for offloading network traffic according to an embodiment of the present invention. The method includes:
100. Obtain link utilization information of a network.

The network may be any network capable of implementing communication functions. The embodiment of the present invention is illustrated mainly by taking an autonomous system as an example. The link utilization information of the network includes link utilization information of each link on the network.

120. Compute a shortest path and a second shortest path to a content source.

This step may be performed when it is determined that network congestion has already occurred according to the obtained link utilization information or when it is determined that network congestion will occur according to the obtained link utilization information.

The "second shortest path" is relative to the "shortest path", and a plurality of "second shortest paths" may be available. A plurality of "shortest paths" may also be available (for example, equal-cost multi-path).

140. Select a light-load path from the shortest path and the second shortest path according to the obtained link utilization information.

160. Select traffic and disperse the selected traffic onto the light-load path.

The link utilization information may be carried in an extended interior gateway protocol (Interior Gateway Protocol, IGP) advertisement message, for example, an OSPF Opaque LSA.

The selecting traffic and dispersing the selected traffic onto the light-load path includes: when congestion occurs, selecting traffic on one or more subnets, and transmitting the traffic on the one or more subnets over the light-load path.

In the foregoing embodiment of the method, dynamic load balancing of traffic is implemented by collecting and using link utilization information, so that network congestion can be mitigated.

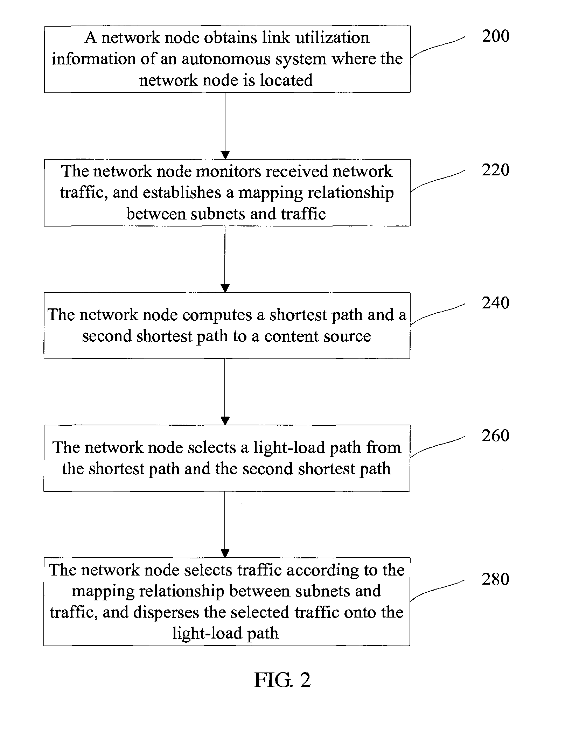

FIG. 2 is a schematic flowchart of another method for offloading network traffic according to an embodiment of the present invention. The method includes:

200. A network node obtains link utilization information of an autonomous system where the network node is located.

The link utilization information of the autonomous system may be link utilization of each link in the autonomous system where the network node is located or egress link utilization of an edge device of the autonomous system where the network node is located.

The process specifically includes: advertising, by each network node in the autonomous system, link utilization information of the each network node, and synchronizing the link utilization information of the whole autonomous system through a flooded link state advertisement (Link State Advertisement, LSA), that is, obtaining, by the network node, through an LSA, the link utilization information of each link in the autonomous system and the egress link utilization information of the edge device of the autonomous system.

The link utilization information may be advertised by the network node on a real-time and periodic basis or according to a certain rule. Real-time advertisement means that link utilization information is advertised when the link utilization is changed; periodic advertisement means that the link utilization information is advertised according to a set period; and advertising according to a rule means that the link utilization information is advertised according to a set rule, for example, the link utilization information is advertised when the link utilization is smaller than 30% or greater than 60%.

The result of performing this step is that the network node can obtain the link utilization information of each link in the autonomous system where the network node is located.

220. The network node monitors received network traffic, and establishes a mapping relationship between subnets and traffic.

The purpose of establishing a mapping relationship between subnets and traffic is to disperse traffic according to subnets when network congestion occurs, that is, in a process of dispersing traffic, it needs to be ensured that traffic on the same subnet is transmitted over the same path.

Step 200 and step 220 may be performed in any sequence.

240. When determining, according to the obtained link utilization information, that network congestion has already occurred or will occur, the network node computes a shortest path and a second shortest path from the network node to a content source.

The "second shortest path" is relative to the "shortest path", and a plurality of "second shortest paths" may be available. A plurality of "shortest paths" may also be available (for example, equal-cost multi-path).

260. The network node selects a light-load path from the shortest path and the second shortest path.

280. The network node selects traffic according to the mapping relationship between subnets and traffic, and disperses the selected traffic onto the light-load path.

Specifically, the network node selects traffic on one or more subnets according to the mapping relationship between subnets and traffic, and transmits the traffic on the one or more subnets over the light-load path.

The network node can be selected according to the following rules:
(1) a congestion node;
(2) when the congestion node does not have a plurality of optional paths to the content source or does not have a light-load path, the network node is an upstream node of the congestion node;
(3) when there is a plurality of nodes in the upstream node of the congestion node, the network node is a node that has a plurality of optional paths including a light-load path to the content source among the plurality of upstream nodes, or is a node with a smallest Router-ID among the plurality of upstream nodes; and
(4) when there is a plurality of nodes in the upstream node of the congestion node and each of the plurality of upstream nodes has a plurality of optional paths including a light-load path to the content source, the network node is an upstream node that inputs the most traffic to the congestion node.

If congestion is still not mitigated after the traffic is dispersed by using a network node, another network node may be selected continuously according to the foregoing rule to disperse the traffic.

In the foregoing embodiment of the present invention, each network node advertises its own link utilization information, so that link utilization information of a whole autonomous system is shared. When congestion has already occurred or will occur on a network, a light-load path can be selected according to the link utilization information to disperse traffic, thereby implementing dynamic load balancing of the traffic and effectively preventing or mitigating network congestion.

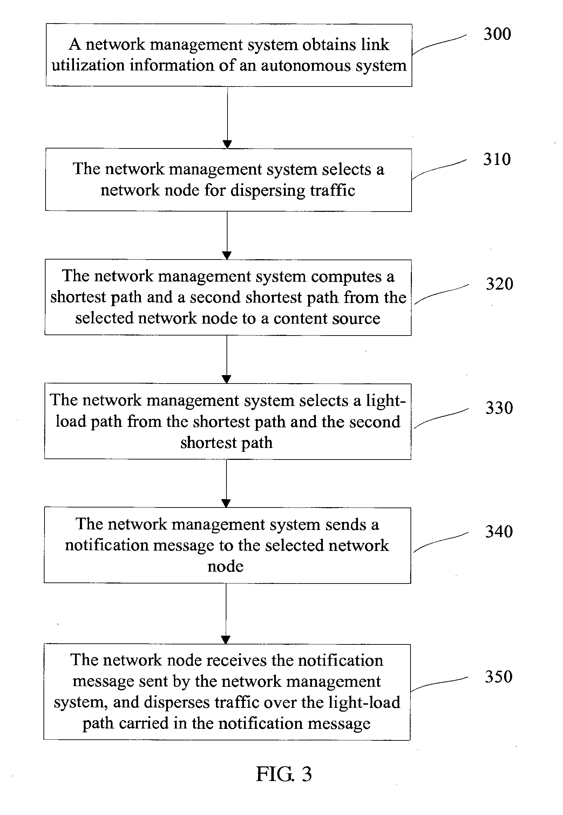

FIG. 3 is a schematic flowchart of another method for offloading network traffic according to an embodiment of the present invention. The method includes:

300. A network management system obtains link utilization information of an autonomous system.

A network management system may manage one autonomous system, or a plurality of autonomous systems. This embodiment takes managing one autonomous system as an example. When there is a plurality of autonomous systems, the network management system manages the plurality of autonomous systems separately.

The link utilization information of the autonomous system includes link utilization information of each link in the autonomous system and egress link utilization information of an edge device of the autonomous system.

The link utilization information may be periodically obtained by the network management system from all network nodes in the autonomous system, or be periodically reported by all network nodes in the autonomous system to the network management system. Alternatively, after each network node in the autonomous system obtains link utilization information of each link in the autonomous system through a flooding mechanism, the network management system may query any one network node in the autonomous system to obtain the link utilization information.

For the method for obtaining the link utilization information of each link in the autonomous system by each network node through the flooding mechanism, refer to the foregoing embodiment, which is not further described herein.

310. When determining, according to the obtained link utilization information, that network congestion has already occurred or will occur, the network management system selects a network node for dispersing traffic.

The network management system may determine that network congestion occurs by querying actively or according to a report from any network node in the autonomous system.

For a rule of selecting a network node for dispersing traffic, refer to the foregoing embodiment, which is not further described herein.

320. The network management system computes a shortest path and a second shortest path from the selected network node to a content source.

The "second shortest path" is relative to the "shortest path", and a plurality of "second shortest paths" may be available. A plurality of "shortest paths" may also be available (for example, equal-cost multi-path).

330. The network management system selects a light-load path from the shortest path and the second shortest path.

Specifically, the network management system selects, according to the obtained link utilization information of the autonomous system, a path with lower link utilization from the shortest path and the second shortest path as the light-load path.

340. The network management system sends a notification message to the selected network node, where the notification message carries the selected light-load path and is used to enable the selected network node to disperse traffic over the selected light-load path.

350. The network node receives the notification message sent by the network management system, and disperses traffic over the light-load path carried in the notification message.

Further, the network node may monitor received network traffic, and establish a mapping relationship between subnets and traffic. When the network node needs to disperse traffic, the network node selects traffic on one or more subnets according to the mapping relationship between subnets and traffic, and transmits the traffic on the one or more subnets over the light-load path to disperse the traffic. In a process of dispersing the traffic, it needs to be ensured that traffic on the same subnet is transmitted over the same path. The mapping relationship may be or may not be sent to the network management system.

In the foregoing embodiment of the present invention, a network management system obtains link utilization information of a whole autonomous system; when congestion has already occurred or will occur on a network, the network management system selects a network node and a light-load path to enable the network node to disperse traffic. In this way, dynamic load balancing of traffic is implemented, thereby effectively preventing or mitigating network congestion.

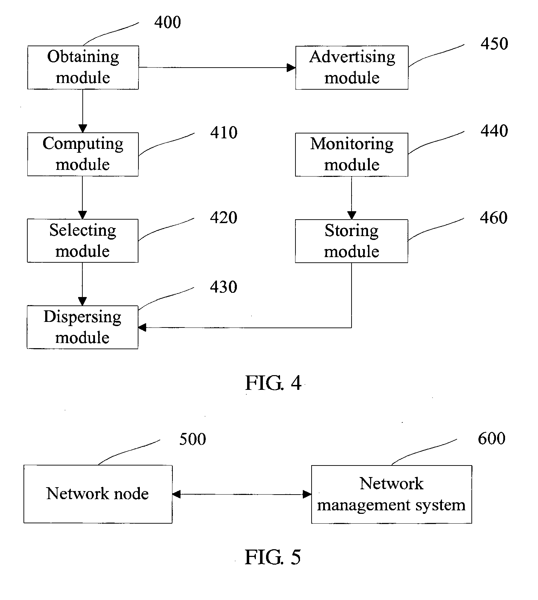

As shown in FIG. 4, an embodiment of the present invention further provides a network node configured to implement the method in the foregoing embodiment of the present invention. The network node includes:
an obtaining module 400, configured to obtain link utilization information of a network where the network node is located (referring to step 100 and step 200);
a computing module 410, configured to compute a shortest path and a second shortest path from the network node to a content source when it is determined that network congestion has already occurred or will occur according to the obtained link utilization information (referring to step 120 and step 240);
a selecting module 420, configured to select a light-load path from the shortest path and the second shortest path (referring to step 140 and step 260); and
a dispersing module 430, configured to select traffic and disperse the selected traffic onto the light-load path selected by the selecting module 420 (referring to 160 and step 280);

The network node may further include a monitoring module 440 configured to monitor received network traffic and establish a mapping relationship between subnets and traffic (referring to step 220). The dispersing module is specifically configured to select traffic according to the mapping relationship between subnets and traffic, and disperse the selected traffic onto the light-load path (referring to step 280).

The network node may further include an advertising module 450 configured to advertise link utilization information of the network node and a storing module 460 configured to store a mapping relationship between subnets and traffic.

In the foregoing embodiment of the present invention, a network node obtains link utilization information of a whole autonomous system; when congestion has already occurred or will occur on a network, the network node selects a light-load path according to the link utilization information to disperse traffic. In this way, dynamic load balancing of traffic is implemented, thereby effectively preventing or mitigating network congestion.

As shown in FIG. 5, an embodiment of the present invention further provides a network system configured to implement the method in the foregoing embodiment of the present invention. The network system includes at least one network node 500 and a network management system 600.

The network management system 600 is configured to: obtain link utilization information of an autonomous system (referring to step 300); when determining, according to the obtained link utilization information, that network congestion has already occurred or will occur, select a network node for dispersing traffic (referring to step 310); compute a shortest path and a second shortest path from the selected network node to a content source (referring to step 320); select a light-load path from the shortest path and the second shortest path (referring to step 330); and send a notification message to the selected network node, where the notification message carries the selected light-load path (referring to step 340).

The network node 500 is configured to receive the notification message, and disperse traffic over the light-load path carried in the notification message (referring to step 350).

The network node 500 may be further configured to monitor network traffic, and establish a mapping relationship between subnets and traffic; when traffic needs to be dispersed, the network node selects traffic according to the mapping relationship between subnets and traffic, and disperses the selected traffic onto the light-load path. In a process of dispersing the traffic, it needs to be ensured that traffic on the same subnet is transmitted over the same path.

The network node 500 may be further configured to advertise link utilization information of the network node in an autonomous system, and periodically report to the network management system the link utilization information of the network node or link utilization information of an autonomous system where the network node is located.

In the foregoing embodiment of the present invention, a network management system obtains link utilization information of a whole autonomous system; when congestion has already occurred or will occur on a network, the network management system selects a network node and a light-load path to enable the network node to disperse traffic. In this way, dynamic load balancing of traffic is implemented, thereby effectively preventing or mitigating network congestion.

Through the foregoing description of the embodiments, it is clear to a person skilled in the art that the present invention may be implemented by software plus necessary universal hardware, and definitely may also be implemented by hardware, but in many cases, the former is a preferred implementation manner. Based on such an understanding, the technical solutions of the present invention essentially, or the part contributing to the prior art may be implemented in a form of a software product. The computer software product is stored in a readable storage medium, for example, a floppy disk, hard disk, or optical disk of the computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for offloading network traffic, comprising:
obtaining link utilization information of a network (100);
computing a shortest path and a second shortest path to a content source (120);
selecting a light-load path from the shortest path and the second shortest path according to the obtained link utilization information (140);
monitoring, by a network node, received network traffic, and establishing a mapping relationship between subnets and traffic (220); and
selecting, by the network node, traffic on one or more subnets according to the mapping relationship between subnets and traffic, and transmitting the traffic on the one or more subnets over the light-load path (280), wherein traffic on the same subnet is transmitted over the same path.

2. The method according to claim 1, wherein:
the obtaining link utilization information of a network specifically comprises: obtaining, by the network node, through a flooded link state advertisement LSA, link utilization information of each link in an autonomous system where the network node is located (200); and
the computing a shortest path and a second shortest path to a content source comprises: computing, by the network node, a shortest path and a second shortest path from the network node to the content source (240).

3. The method according to claim 1, wherein the obtaining link utilization information of a network specifically comprises: obtaining, by a network management system, link utilization information of an autonomous system (300).

4. The method according to claim 3, wherein:
before the computing a shortest path and a second shortest path to a content source, the method further comprises: selecting, by the network management system, a network node for dispersing traffic (310); and
the computing a shortest path and a second shortest path to a content source comprises: computing, by the network management system, a shortest path and a second shortest path from the selected network node to the content source (320).

5. The method according to claim 4, wherein before the selecting traffic and dispersing the selected traffic onto the light-load path, the method further comprises:
sending, by the network management system, a notification message to the selected network node, wherein the notification message carries the selected light-load path and is used to enable the selected network node to disperse traffic over the selected light-load path (340).

6. A network node, comprising:
an obtaining module (400), configured to obtain link utilization information of a network wherein the network node is located;
a computing module (410), configured to compute a shortest path and a second shortest path from the network node to a content source;
a selecting module (420), configured to select a light-load path from the shortest path and the second shortest path;
a monitoring module (440), configured to monitor received network traffic, and establish a mapping relationship between subnets and traffic;
a storing module (460), configured to store the mapping relationship; and
a dispersing module (430), configured to select traffic according to the mapping relationship between subnets and traffic, and disperse the selected traffic onto the light-load path, wherein traffic on the same subnet is transmitted over the same path.

7. The network node according to claim 6, further comprising:
an advertising module (450), configured to advertise link utilization information of the network node.

8. A network system, comprising:
a network management system (600), configured to: obtain link utilization information of an autonomous system; select a network node (500) for dispersing traffic; compute a shortest path and a second shortest path from the network node(500) to a content source; select a light-load path from the shortest path and the second shortest path; and send a notification message to the selected network node (500), wherein the notification message carries the selected light-load path;
the network node (500), configured to monitor network traffic, establish a mapping relationship between subnets and traffic, receive the notification message, select traffic on one or more subnets according to the mapping relationship between subnets and traffic, and transmit the traffic on the one or more subnets over the light-load path carried in the notification message, wherein traffic on the same subnet is transmitted over the same path.

## Patentansprüche

1. Verfahren zum Entlasten von Netzwerkverkehr, umfassend:
Erhalten von Verknüpfungsnutzung-Informationen eines Netzwerks (100);
Berechnen eines kürzesten Wegs und eines zweitkürzesten Wegs zu einer Inhaltsquelle (120);
Auswählen eines Wegs geringer Belastung aus dem kürzesten Weg und dem zweitkürzesten Weg gemäß den erhaltenen Verknüpfungsnutzung-Informationen (140);
Überwachen, durch einen Netzwerkknoten, von empfangenem Netzwerkverkehr und Erstellen einer Abbildungsbeziehung zwischen Teilnetzen und Verkehr (220); und
Auswählen, durch den Netzwerkknoten, von Verkehr in einem oder mehreren Teilnetzen gemäß der Abbildungsbeziehung zwischen Teilnetzen und Verkehr und Übertragen des Verkehrs in dem einen oder den mehreren Teilnetzen über den Weg geringer Belastung (280), wobei Verkehr in dem gleichen Teilnetz über den gleichen Weg übertragen wird.

2. Verfahren nach Anspruch 1, wobei:
das Erhalten von Verknüpfungsnutzung-Informationen eines Netzwerks spezifisch umfasst: Erhalten, durch den Netzwerkknoten, durch eine Ankündigung eines überschwemmten Verknüpfungszustands (flooded link state advertisement, LSA) von Verknüpfungsnutzung-Informationen jeder Verknüpfung in einem autonomen System, in dem sich der Netzwerkknoten befindet (200); und
das Berechnen eines kürzesten Wegs und eines zweitkürzesten Wegs zu einer Inhaltsquelle umfasst: Berechnen, durch den Netzwerkknoten, eines kürzesten Wegs und eines zweitkürzesten Wegs von dem Netzwerkknoten zu der Inhaltsquelle (240).

3. Verfahren nach Anspruch 1, wobei das Erhalten von Verknüpfungsnutzung-Informationen eines Netzwerks spezifisch umfasst: Erhalten, durch ein Netzwerkverwaltungssystem, von Verknüpfungsnutzung-Informationen eines autonomen Systems (300).

4. Verfahren nach Anspruch 3, wobei:
das Verfahren vor dem Berechnen eines kürzesten Wegs und eines zweitkürzesten Wegs zu einer Inhaltsquelle ferner umfasst: Auswählen, durch das Netzwerkverwaltungssystem, eines Netzwerkknotens zum Verteilen von Verkehr (310); und
das Berechnen eines kürzesten Wegs und eines zweitkürzesten Wegs zu einer Inhaltsquelle umfasst: Berechnen, durch das Netzwerkverwaltungssystem, eines kürzesten Wegs und eines zweitkürzesten Wegs von dem ausgewählten Netzwerkknoten zu der Inhaltsquelle (320).

5. Verfahren nach Anspruch 4, wobei das Verfahren vor dem Auswählen von Verkehr und Verteilen des ausgewählten Verkehrs auf den Weg geringer Belastung ferner umfasst:
Senden, durch das Netzwerkverwaltungssystem, einer Benachrichtigungsnachricht an den ausgewählten Netzwerkknoten, wobei die Benachrichtigungsnachricht den ausgewählten Weg geringer Belastung trägt und verwendet wird, den ausgewählten Netzwerkknoten in die Lage zu versetzen, Verkehr über den ausgewählten Weg geringer Belastung zu verteilen (340).

6. Netzwerkknoten, umfassend:
ein Erhaltungsmodul (400), konfiguriert zum Erhalten von Verknüpfungsnutzung-Informationen eines Netzwerks, in dem sich der Netzwerkknoten befindet;
ein Berechnungsmodul (410), konfiguriert zum Berechnen eines kürzesten Wegs und eines zweitkürzesten Wegs von dem Netzwerkknoten zu einer Inhaltsquelle;
ein Auswahlmodul (420), konfiguriert zum Auswählen eines Wegs geringer Belastung aus dem kürzesten Weg und dem zweitkürzesten Weg;
ein Überwachungsmodul (440), konfiguriert zum Überwachen von empfangenem Netzwerkverkehr und Erstellen einer Abbildungsbeziehung zwischen Teilnetzen und Verkehr;
ein Speichermodul (460), konfiguriert zum Speichern der Abbildungsbeziehung; und
ein Verteilungsmodul (430), konfiguriert zum Auswählen von Verkehr gemäß der Abbildungsbeziehung zwischen Teilnetzen und Verkehr und Verteilen des ausgewählten Verkehrs auf den Weg geringer Belastung, wobei Verkehr in dem gleichen Teilnetz über den gleichen Weg übertragen wird.

7. Netzwerkknoten nach Anspruch 6, ferner umfassend:
ein Ankündigungsmodul (450), konfiguriert zum Ankündigen von Verknüpfungsnutzung-Informationen des Netzwerkknotens.

8. Netzwerksystem, umfassend:
ein Netzwerkverwaltungssystem (600), konfiguriert zum: Erhalten von Verknüpfungsnutzung-Informationen eines autonomen Netzwerks; Auswählen eines Netzwerkknotens (500) zum Verteilen von Verkehr; Berechnen eines kürzesten Wegs und eines zweitkürzesten Wegs von dem Netzwerkknoten (500) zu einer Inhaltsquelle; Auswählen eines Wegs geringer Belastung aus dem kürzesten Weg und dem zweitkürzesten Weg; und Senden einer Benachrichtigungsnachricht an den ausgewählten Netzwerkknoten (500), wobei die Benachrichtigungsnachricht den ausgewählten Weg geringer Belastung trägt;
den Netzwerkknoten (500), konfiguriert zum Überwachen von Netzwerkverkehr, Erstellen einer Abbildungsbeziehung zwischen Teilnetzen und Verkehr, Empfangen der Benachrichtigungsnachricht, Auswählen von Verkehr in einem oder mehreren Teilnetzen gemäß der Abbildungsbeziehung zwischen Teilnetzen und Verkehr und Übertragen des Verkehrs in dem einen oder den mehreren Teilnetzen über den Weg geringer Belastung, der in der Benachrichtigungsnachricht getragen wird, wobei Verkehr in dem gleichen Teilnetz über den gleichen Weg übertragen wird.

## Revendications

1. Procédé de délestage de trafic de réseau, comprenant :
l'obtention d'informations d'utilisation de liaison d'un réseau (100) ;
le calcul du chemin le plus court et du second chemin le plus court jusqu'à une source de contenu (120) ;
la sélection d'un chemin de charge légère parmi le chemin le plus court et le second chemin le plus court en fonction des informations d'utilisation de liaison obtenues (140) ;
le contrôle, par un noeud de réseau, du trafic de réseau reçu, et l'établissement d'une relation de correspondance entre des sous-réseaux et le trafic (220) ; et
la sélection, par le noeud de réseau, du trafic sur un ou plusieurs sous-réseaux en fonction de la relation de correspondance entre les sous-réseaux et le trafic, et la transmission du trafic sur les un ou plusieurs sous-réseaux sur le chemin de charge légère (280), le trafic sur le même sous-réseau étant transmis sur le même chemin.

2. Procédé selon la revendication 1, dans lequel :
l'obtention d'informations d'utilisation de liaison d'un réseau comprend spécifiquement : l'obtention, par le noeud de réseau, par une annonce d'état de liaison, LSA, disséminée, d'informations d'utilisation de liaison de chaque liaison dans un système autonome dans lequel le noeud de réseau est situé (200) ; et
le calcul du chemin le plus court et du second chemin le plus court jusqu'à une source de contenu comprend : le calcul, par le noeud de réseau, du chemin le plus court et du second chemin le plus court jusqu'à la source de contenu (240).

3. Procédé selon la revendication 1, dans lequel l'obtention d'informations d'utilisation de liaison d'un réseau comprend spécifiquement : l'obtention, par un système de gestion de réseau, d'informations d'utilisation de liaison d'un système autonome (300).

4. Procédé selon la revendication 3, dans lequel :
avant le calcul du chemin le plus court et du second chemin le plus court jusqu'à une source de contenu, le procédé comprend en outre : la sélection, par le système de gestion de réseau, d'un noeud de réseau pour disperser le trafic (310) ; et
le calcul du chemin le plus court et du second chemin le plus court jusqu'à une source de contenu comprend : le calcul, par le système de gestion de réseau, du chemin le plus court et du second chemin le plus court depuis le noeud de réseau sélectionné jusqu'à la source de contenu (320).

5. Procédé selon la revendication 4, comprenant en outre avant la sélection du trafic et la dispersion du trafic sur le chemin de charge légère :
l'envoi, par le système de gestion de réseau, d'un message de notification au noeud de réseau sélectionné, le message de notification incluant le chemin de charge légère sélectionné et étant utilisé pour permettre au noeud de réseau sélectionné de disperser le trafic sur le chemin de charge légère sélectionné (340).

6. Noeud de réseau, comprenant :
un module d'obtention (400), configuré pour obtenir des informations d'utilisation de liaison d'un réseau dans lequel est situé le noeud de réseau ;
un module de calcul (410), configuré pour calculer le chemin le plus court et le second chemin le plus court depuis le noeud de réseau jusqu'à une source de contenu ;
un module de sélection (420), configuré pour sélectionner un chemin de charge légère parmi le chemin le plus court et le second chemin le plus court ;
un module de contrôle (440), configuré pour contrôler un trafic de réseau reçu, et établir une relation de correspondance entre des sous-réseaux et le trafic ;
un module de mémorisation (460), configuré pour mémoriser la relation de correspondance ; et
un module de dispersion (430), configuré pour sélectionner le trafic en fonction de la relation de correspondance entre les sous-réseaux et le trafic, et disperser le trafic sur le chemin de charge légère, le trafic sur le même sous-réseau étant transmis sur le même chemin.

7. Noeud de réseau selon la revendication 6, comprenant en outre :
un module d'annonce (450), configuré pour annoncer des informations d'utilisation de liaison du noeud de réseau.

8. Système de réseau, comprenant :
un système de gestion de réseau (600), configuré pour : obtenir des informations d'utilisation de liaison d'un système autonome, sélectionner un noeud de réseau (500) pour disperser le trafic ; calculer le chemin le plus court et le second chemin le plus court depuis le noeud de réseau (500) jusqu'à une source de contenu ; sélectionner un chemin de charge légère parmi le chemin le plus court et le second chemin le plus court ; et envoyer un message de notification au noeud de réseau (500) sélectionné, le message de notification incluant le chemin de charge légère sélectionné ;
le noeud de réseau (500), configuré pour contrôler le trafic de réseau, établir une relation de correspondance entre des sous-réseaux et le trafic, recevoir le message de notification, sélectionner le trafic sur un ou plusieurs sous-réseaux en fonction de la relation de correspondance entre les sous-réseaux et le trafic, et transmettre le trafic sur les un ou plusieurs sous-réseaux sur le chemin de charge légère inclus dans le message de notification, le trafic sur le même sous-réseau étant transmis sur le même chemin.
